# EUROPEAN PATENT APPLICATION

(11) **EP 3 534 180 A1**
(43) Date of publication of application: **04.09.2019**
(21) Application number: 18211480.1
(22) Date of filing: 11.12.2018
(51) Int. Cl.: G01S 17/10, G01S 17/88, G08B 13/183, G08B 13/196

(54) **DETERMINATION DEVICE AND CONTROL METHOD OF DETERMINATION DEVICE**

(30) Priority: 01.03.2018 JP 2018036809
(71) Applicant: OMRON Corporation, Shiokoji-dori, Shimogyo-Ku Kyoto-shi Kyoto 600-8530 (JP)
(72) Inventor: AKAGI, Tetsuya, Kyoto-shi, Kyoto 600-8530 (JP)
(74) Representative: Becker Kurig Straus

(57) **Abstract**

The disclosure realizes a highly reliable determination device for determining the distance to an object even if general-purpose optical distance measurement modules or the like are used. The determination device (2) determines whether at least one of the signals respectively outputted by a plurality of optical distance measurement modules (21a, 21b) indicates that the distance to the object is within a predetermined range, wherein the observation area of an optical distance measurement module (21a) is within the observation area of another optical distance measurement module (21b).

## Description

### BACKGROUND

### Technical Field

The disclosure relates to a determination device that outputs a signal indicating intrusion detection when the distance to an object is within a predetermined range.

### Description of Related Art

As a device for measuring the distance to a detected object based on the ToF (Time of Flight) principle, for example, Patent Document 1 discloses an optical distance measurement module that emits light to the detected object with a light emitting element, reads the reflected light with a light receiving element, and performs distance calculation.

### [Related Art]

### [Patent Document]

[Patent Document 1] Specification of US Patent Application Publication No. 2016/0327649 (November 10, 2016)

### SUMMARY

When the optical distance measurement module is applied to a safety control-related device that outputs a signal indicating intrusion detection when the distance to the object is within a predetermined range, the safety control-related device needs to be highly reliable. Therefore, it is difficult to realize the above-described conventional technique using a general-purpose optical distance measurement module or the like. For example, there are problems such as the necessity of developing dedicated optical distance measurement IC, etc., higher product cost and development expenses, and complication of the configuration itself.

An embodiment of the disclosure is to realize a highly reliable determination device, which outputs a signal indicating intrusion detection when the distance to an object is within a predetermined range, even if general-purpose optical distance measurement modules or the like are used.

In order to solve the above problems, a determination device according to an embodiment of the disclosure is a determination device for outputting a signal indicating intrusion detection when a distance to an object is within a predetermined range. The determination device includes a plurality of acquisition parts each acquiring a signal outputted by each of a plurality of optical distance measurement sensors included in a sensor set; and a plurality of intrusion determination parts each determining whether at least one of the signals respectively received by the acquisition parts indicates that the distance to the object is within the predetermined range, wherein an observation area of a first optical distance measurement sensor, which is an optical distance measurement sensor in the sensor set, is within an observation area of a second optical distance measurement sensor, which is an optical distance measurement sensor different from the first optical distance measurement sensor in the sensor set.

Further, a control method of a determination device according to an embodiment of the disclosure is a control method of a determination device for outputting a signal indicating intrusion detection when a distance to an object is within a predetermined range. The control method includes a plurality of acquisition steps each acquiring a signal outputted by each of a plurality of optical distance measurement sensors included in a sensor set; and a plurality of intrusion determination steps each determining whether at least one of the signals respectively received in the acquisition steps indicates that the distance to the object is within the predetermined range, wherein an observation area of a first optical distance measurement sensor, which is an optical distance measurement sensor in the sensor set, is within an observation area of a second optical distance measurement sensor, which is an optical distance measurement sensor different from the first optical distance measurement sensor in the sensor set.

According to the above configuration, when determining that the distance indicated by at least one of the signals respectively outputted by the optical distance measurement sensors included in the sensor set is within the predetermined range, the determination device outputs a signal indicating intrusion detection.

Therefore, in the case where at least one of the optical distance measurement sensors included in the sensor set is functioning normally, even if other optical distance measurement sensors fail, it is still possible to determine whether the distance to the object is within the predetermined range, that is, to determine whether an intrusion occurs and output the determination result.

Further, according to the above configuration, the intrusion determination parts perform determination based on the signals respectively outputted by the optical distance measurement sensors. Therefore, in the case where at least one of the intrusion determination parts is functioning normally, even if other intrusion determination parts fail, it is still possible to determine whether an intrusion occurs and output the determination result.

That is, according to the above configuration, even if a part of the configuration included in the determination device fails, it is still possible to determine whether an intrusion occurs and output a signal indicating intrusion detection when it is determined that there is an intrusion. Therefore, the determination device can determine whether an intrusion occurs and output a signal indicating intrusion detection when determining that there is an intrusion with high reliability.

Further, the above determination device may be used for safety control of an external device. Moreover, an optical distance measurement module may be used as the optical distance measurement sensor included in the sensor set. In this case, it is possible to use general-purpose optical distance measurement modules for the safety control-related determination device. Even if the determination device uses optical distance measurement modules such as general-purpose optical distance measurement modules that are not necessarily dedicated for safety control, the determination device can still determine whether an intrusion occurs by using the signals respectively outputted by these optical distance measurement sensors. Then, when the determination device determines that the distance indicated by at least one of the signals respectively outputted by the optical distance measurement sensors is within the predetermined range, the determination device outputs a signal indicating intrusion detection. Accordingly, the determination device can achieve high reliability even if it uses general-purpose optical distance measurement modules or the like, for example.

In addition, the observation area of the first optical distance measurement sensor is within the observation area of the second optical distance measurement sensor. Thus, if the object is in the observation area of the first optical distance measurement sensor, the object is definitely in the observation area of the second optical distance measurement sensor. Therefore, the disclosure has an effect that the observation result of the first optical distance measurement sensor can be verified by the observation result of the second optical distance measurement sensor.

The disclosure further has an effect of ensuring that the area observable by the first optical distance measurement sensor has an area overlapping the area observable by the second optical distance measurement sensor, and preventing occurrence of a non-overlapping area.

The determination device according to an embodiment of the disclosure includes a plurality of verification parts each verifying a distance indicated by a signal outputted by the first optical distance measurement sensor according to a distance indicated by a signal outputted by the second optical distance measurement sensor, wherein if the verification part verifies that the distance indicated by the signal outputted by the first optical distance measurement sensor and the distance indicated by the signal outputted by the second optical distance measurement sensor are substantially equal, each of the intrusion determination parts determines whether it indicates that the distance indicated by the signal outputted by the first optical distance measurement sensor is within the predetermined range.

According to the above configuration, the verification part verifies the distance indicated by the signal outputted by the first optical distance measurement sensor according to the distance indicated by the signal outputted by the second optical distance measurement sensor which includes the observation area of the first optical distance measurement sensor in the observation area.

Then, the intrusion determination part performs the determination according to the verification result. For example, if the distance indicated by the signal outputted by the first optical distance measurement sensor and the distance indicated by the signal outputted by the second optical distance measurement sensor are substantially equal, the intrusion determination part determines whether the distance indicated by the signal outputted by the first optical distance measurement sensor is within the predetermined range. Further, for example, if the distance indicated by the signal outputted by the first optical distance measurement sensor and the distance indicated by the signal outputted by the second optical distance measurement sensor are not substantially equal, the intrusion determination part determines whether at least one of the distance indicated by the signal outputted by the first optical distance measurement sensor and the distance indicated by the signal outputted by the second optical distance measurement sensor is within the predetermined range. Therefore, the determination device can reliably determine whether the distance to the object is within the predetermined range.

In the determination device according to an embodiment of the disclosure, the object intrudes into the observation areas of the first optical distance measurement sensor and the second optical distance measurement sensor from a predetermined direction, and the observation area of the second optical distance measurement sensor includes a region on a side where the object intrudes with respect to the observation area of the first optical distance measurement sensor.

According to the above configuration, when the object under measurement intrudes into the observation area of the first optical distance measurement sensor, the object under measurement inevitably intrudes into the observation area of the second optical distance measurement sensor.

Thus, when the distance indicated by the signal outputted by the second optical distance measurement sensor is within the predetermined range, there is a high possibility that the distance indicated by the signal outputted by the first optical distance measurement sensor is within the predetermined range.

That is, according to the above configuration, even if the first optical distance measurement sensor fails, the determination device still determines whether an intrusion occurs and outputs a signal indicating intrusion detection when determining that there is an intrusion. Since the determination device determines whether an intrusion occurs and outputs a signal indicating intrusion detection when determining that there is an intrusion even if the first optical distance measurement sensor fails, it has high reliability in determining intrusion.

Further, according to the above configuration, when the object under measurement intrudes into the observation area of the first optical distance measurement sensor, the object under measurement first intrudes into the observation area of the second optical distance measurement sensor.

Here, the intrusion determination parts determine that there is an intrusion when at least one of the distances is within the predetermined range. Therefore, if the object first intrudes into the observation area of the second optical distance measurement sensor, the determination device can detect intrusion of the object as early as possible.

In the determination device according to an embodiment of the disclosure, a plurality of the sensor sets are provided, and the signals outputted by the optical distance measurement sensors of each of the sensor sets are transmitted to each of the acquisition parts by serial transmission.

According to the above configuration, the signal to be outputted is acquired by serial transmission. Therefore, the number of lines of the determination device can be reduced. Thus, it is possible to reduce the manufacturing cost.

According to an embodiment of the disclosure, it is possible to realize a highly reliable determination device, which outputs a signal indicating intrusion detection when the distance to an object is within a predetermined range, even if general-purpose optical distance measurement modules or the like are used.

### BRIEF DESCRIPTION OF THE DRAWINGS

FIG. 1 is a block diagram showing an example of the configuration of main parts of the determination device according to an embodiment of the disclosure.
FIG. 2 is a diagram showing an example of application of the determination device according to an embodiment of the disclosure.
FIG. 3(a) and FIG. 3(b) are diagrams showing the observable areas of the optical distance measurement modules according to an embodiment of the disclosure.
FIG. 4 is a flowchart showing an example of the flow of intrusion determination processing of the determination device according to an embodiment of the disclosure.
FIG. 5 is a diagram showing an example of application of the determination device according to a modified example of the disclosure.
FIG. 6 is a diagram showing an example of an end effector of a robot provided with the determination device according to a modified example of the disclosure.

### DESCRIPTION OF THE EMBODIMENTS

### [Embodiment]

Hereinafter, an embodiment according to one aspect of the disclosure (hereinafter, also referred to as "the present embodiment") will be described with reference to the drawings.

### §1 Application Example

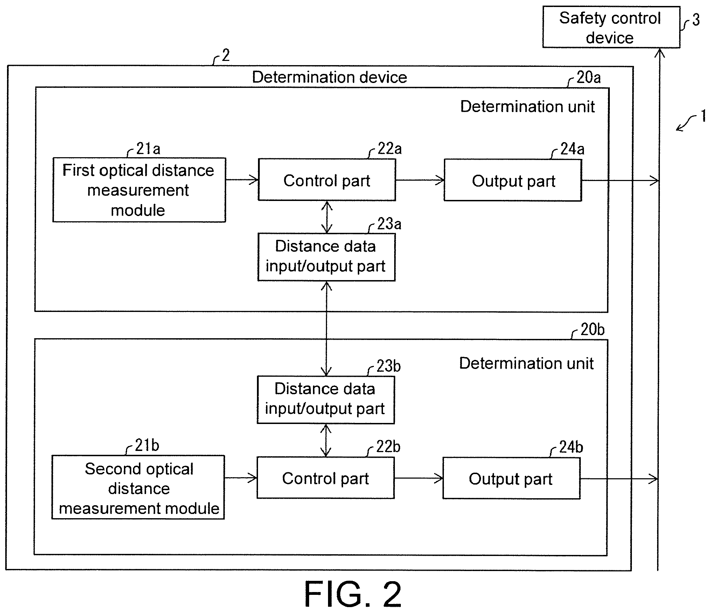

FIG. 2 is a diagram showing an example of application of a determination device 2 according to the present embodiment in a safety control system 1. First, an outline of the application example of the determination device 2 will be described with reference to FIG. 2.

The safety control system 1 is a system that stops driving a movable part, such as an end effector of a robot, before a person touches the movable part, for example, when detecting that the person approaches the periphery of the movable part. As shown in FIG. 2, the safety control system 1 includes the determination device 2 and a safety control device 3. When receiving a signal indicating intrusion detection from the determination device 2, the safety control device 3 executes safety control and performs control to stop driving the movable part such as the end effector of the robot, for example.

The determination device 2 outputs a signal indicating intrusion detection to the safety control device 3 when the distance to an object is within a predetermined range. As shown in FIG. 2, the determination device 2 includes a determination unit 20a and a determination unit 20b each outputting a signal indicating intrusion detection. The determination unit 20a includes a first optical distance measurement module (first optical distance measurement sensor) 21a, a control part 22a, a distance data input/output part 23a, and an output part 24a. The determination unit 20b has the same configuration as the determination unit 20a. The first optical distance measurement module 21a measures the distance to the object under measurement based on the ToF (Time of Flight) principle and outputs a signal indicating the distance to the control part 22a. The first optical distance measurement module 21a and the second optical distance measurement module (second optical distance measurement sensor) 21b included in the determination unit 20b are included in one sensor set.

The control part 22a acquires the signal outputted by the first optical distance measurement module 21a. In addition, the control part 22a acquires a signal outputted by the second optical distance measurement module 21b from the control part 22b via the distance data input/output part 23a and the distance data input/output part 23b.

Each of the control part 22a and the control part 22b determines whether at least one of the signals outputted by the first optical distance measurement module 21a and the second optical distance measurement module 21b indicates that the distance to the object is within the predetermined range.

The observation area of the first optical distance measurement module 21a in the above-described sensor set is within the observation area of the second optical distance measurement module 21b which is an optical distance measurement sensor different from the first optical distance measurement module 21a.

Each of the control part 22a and the control part 22b determines whether at least one of the signals outputted by the first optical distance measurement module 21a and the second optical distance measurement module 21b indicates that the distance to the object is within the predetermined range. The control part 22a and the control part 22b output signals indicating intrusion detection to the safety control device 3 via the output part 24a or the output part 24b according to the result of the determination.

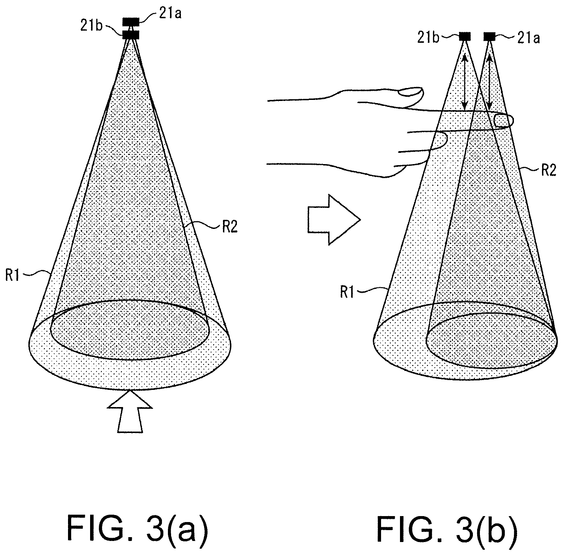

FIG. 3(a) and FIG. 3(b) are diagrams showing the observable area of the first optical distance measurement module 21a or the observable area of the second optical distance measurement module 21b. In FIG. 3(a) and FIG. 3(b), the observable area of the first optical distance measurement module 21a is denoted by R2 and the observable area of the second optical distance measurement module 21b is denoted by R1. As shown in FIG. 3(a) and FIG. 3(b), the observable area R2 of the first optical distance measurement module 21a is set narrower than the observable area R1 of the second optical distance measurement module 21b. The observation area of the first optical distance measurement module 21a may be set as follows. The distance to the object measured in the observation area of the first optical distance measurement module 21a can be verified by the distance indicated by the signal outputted by the second optical distance measurement module 21b. For example, the observation area of the first optical distance measurement module 21a may be an area overlapping the observable area of the second optical distance measurement module 21b. The observation area of the second optical distance measurement module 21b may be the entire observable area of the second optical distance measurement module 21b.

Each of the control part 22a and the control part 22b determines whether at least one of the signals outputted by the first optical distance measurement module 21a and the second optical distance measurement module 21b indicates that the distance to the object is within the predetermined range. The control part 22a and the control part 22b output signals indicating intrusion detection to the safety control device 3 via the output part 24a or the output part 24b according to the result of the determination.

According to the above configuration, when determining that the distance indicated by at least one of the signals respectively outputted by the first optical distance measurement module 21a and the second optical distance measurement module 21b included in the sensor set is within the predetermined range, the determination device 2 outputs a signal indicating intrusion detection. Therefore, in the case where at least one of the first optical distance measurement module 21a and the second optical distance measurement module 21b is functioning normally, even if the other optical distance measurement sensor fails, the determination device 2 can still determine whether an intrusion occurs and output the determination result.

Further, according to the above configuration, the control parts 22a and 22b perform determination based on the signals respectively outputted by the first optical distance measurement module 21a and the second optical distance measurement module 21b. Therefore, in the case where at least one of the control part 22a and the control part 22b is functioning normally, even if one control part fails, it is still possible to determine whether an intrusion occurs and output the determination result.

That is, according to the above configuration, even if a part of the configuration included in the determination device 2 fails, it is still possible to determine whether an intrusion occurs and output a signal indicating intrusion detection when it is determined that there is an intrusion. Therefore, the determination device 2 can determine whether an intrusion occurs and output a signal indicating intrusion detection when determining that there is an intrusion with high reliability.

In addition, the optical distance measurement module included in the sensor set has a simple configuration. Therefore, a general-purpose optical distance measurement module can be used as the optical distance measurement module. According to this configuration, it is possible to provide the user a safety control-related determination device at low cost. In other words, even if optical distance measurement modules such as general-purpose optical distance measurement modules that are not necessarily dedicated for safety control are used as the first optical distance measurement module 21a and the second optical distance measurement module 21b, it is possible to determine whether an intrusion occurs by using the signals respectively outputted by the first optical distance measurement module 21a and the second optical distance measurement module 21b. Then, when the determination device 2 determines that the distance indicated by at least one of the signals respectively outputted by the first optical distance measurement module 21a and the second optical distance measurement module 21b is within the predetermined range, the determination device 2 outputs a signal indicating intrusion detection. Accordingly, the determination device 2 can achieve high reliability even if it uses general-purpose optical distance measurement modules or the like, for example.

Furthermore, when general-purpose processing optical distance measurement modules having a function of distance calculation are used as the first optical distance measurement module 21a and the second optical distance measurement module 21b for the determination device, the circuit configuration to be used as the determination device can be simplified. Therefore, the development period of the determination device can be shortened. Even in the case of using general-purpose optical distance measurement modules as the first optical distance measurement module 21a and the second optical distance measurement module 21b, the determination device 2 outputs a signal indicating intrusion detection when determining that the distance indicated by at least one of the signals respectively outputted by the first optical distance measurement module 21a and the second optical distance measurement module 21b is within the predetermined range. Then, by outputting the signal indicating intrusion detection to the safety control device 3, the determination device 2 enables the safety control device 3 to execute safety control such as emergency stop of a machine. Therefore, the determination device 2 can suppress the manufacturing cost and shorten the development period by using general-purpose optical distance measurement modules, for example, while maintaining the high reliability required for safety control.

In addition, the observation area of the first optical distance measurement module 21a is within the observation area of the second optical distance measurement module 21b. Thus, if the object is in the observation area of the first optical distance measurement module 21a, the object is definitely in the observation area of the second optical distance measurement module 21b. Therefore, the disclosure has an effect that the observation result of the first optical distance measurement module 21a can be verified by the observation result of the second optical distance measurement module 21b.

The disclosure further has an effect of ensuring that the area observable by the first optical distance measurement module 21a (i.e. observable area R2) has an area overlapping the area observable by the second optical distance measurement module 21b (i.e. observable area R1), and preventing occurrence of a non-overlapping area.

### §2 Configuration Example

### (Determination Device 2)

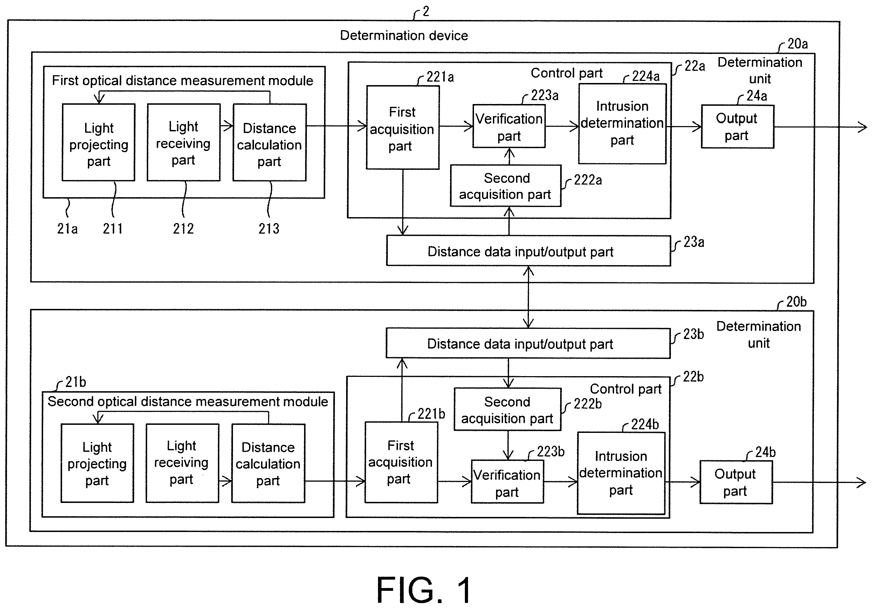

FIG. 1 is a block diagram showing an example of the configuration of main parts of the determination device 2 according to the present embodiment. As shown in FIG. 1, the determination device 2 includes the determination unit 20a and the determination unit 20b. The determination unit 20b has a configuration that is paired with the determination unit 20a and is the same as the determination unit 20a.

In addition, as described above, the observable areas of the first optical distance measurement module 21a and the second optical distance measurement module 21b respectively provided in the determination unit 20a and the determination unit 20b have different ranges. In this specification, what differentiates the configuration of the determination unit 20b from the determination unit 20a will be described.

The determination unit 20a includes the first optical distance measurement module 21a, the control part 22a, the distance data input/output part 23a, and the output part 24a.

### (First Optical Distance Measurement Module 21a)

The first optical distance measurement module 21a is a reflective sensor that includes a light projecting part 211 for projecting light and a light receiving part 212 for receiving reflected light of the light. The first optical distance measurement module 21a also includes a distance calculation part 213. The distance calculation part 213 acquires a signal indicating light reception from the light receiving part 212. The distance calculation part 213 measures the time required for the light projected from the light projecting part 211 to be reflected by the object under measurement and received by the light receiving element of the light receiving part 212 or the phase difference, and calculates the distance to the object under measurement by arithmetic processing. That is, the distance calculation part 213 calculates the distance according to a signal outputted by the light receiving element. The distance calculation part 213 outputs a signal indicating the distance between the object and the first optical distance measurement module 21a, which is calculated according to the signal outputted by each light receiving element, to a first acquisition part 221a of the control part 22a.

The first optical distance measurement module 21a may have a configuration in which the light projecting part 211, the light receiving part 212, and the distance calculation part 213 are not integrated but separated. According to the above configuration, in the case where a general-purpose optical distance measurement module is used as the first optical distance measurement module 21a, the selection range of applicable optical distance measurement modules can be expanded.

### (Control Part 22a)

The control part 22a includes a CPU (Central Processing Unit), a RAM (Random Access Memory), a ROM (Read Only Memory), etc., and controls each component according to information processing. The control part 22a includes a first acquisition part (acquisition part) 221a, a second acquisition part (acquisition part) 222a, a verification part 223a, and an intrusion determination part 224a.

### (First Acquisition Part 221a)

The first acquisition part 221a acquires the signal outputted by the first optical distance measurement module 21a in the sensor set including the first optical distance measurement module 21a and the second optical distance measurement module 21b. The first acquisition part 221a outputs the acquired signal to the verification part 223a. In addition, the first acquisition part 221a outputs the acquired signal to the determination unit 20b via the distance data input/output part 23a.

### (Second Acquisition Part 222a)

The second acquisition part 222a acquires the signal outputted by the second optical distance measurement module 21b in the sensor set including the first optical distance measurement module 21a and the second optical distance measurement module 21b. Specifically, the signal acquired by the first acquisition part 221b of the determination unit 20b is acquired via the distance data input/output part 23a. The second acquisition part 222a outputs the acquired signal to the verification part 223a.

### (Verification Part 223a)

The verification part 223a verifies the distance indicated by the signal outputted by the first optical distance measurement module 21a according to the distance indicated by the signal outputted by the second optical distance measurement module 21b.

Likewise, in the determination unit 20b, the verification part 223b verifies the distance indicated by the signal outputted by the first optical distance measurement module 21a according to the distance indicated by the signal outputted by the second optical distance measurement module 21b.

Here, an example of the verification performed by the verification part 223a and the verification part 223b will be described. For convenience of description, the distance indicated by the signal outputted by the first optical distance measurement module 21a is L1, and the distance indicated by the signal outputted by the second optical distance measurement module 21b is L2.

The verification part 223a determines whether L1 and L2 are equal. For example, the verification part 223a may determine that L1 and L2 are equal if the difference between L1 and L2 is smaller than a predetermined value A. In addition, the verification part 223a may determine that L1 and L2 are not equal if the difference between L1 and L2 is equal to or larger than the predetermined value A. Although the above illustrates an example that the verification is performed by the verification part 223a, the verification part 223b also performs the same verification as the verification part 223a. The verification part 223a outputs the signal indicating the determination result to the intrusion determination part 224a. Further, the verification part 223a outputs the signal outputted by the first optical distance measurement module 21a and the signal outputted by the second optical distance measurement module 21b to the intrusion determination part 224a.

For example, if the verification part 223a determines that L1 and L2 are equal, the verification part 223a may output only the signal outputted by the first optical distance measurement module 21a, among the signal outputted by the first optical distance measurement module 21a and the signal outputted by the second optical distance measurement module 21b.

### (Intrusion Determination Part 224a)

The intrusion determination part 224a determines whether at least one of the signals respectively received by the first acquisition part 221a and the second acquisition part 222a indicates that the distance to the object is within the predetermined range. Further, the intrusion determination part 224b of the determination unit 20b determines whether at least one of the signals respectively received by the first acquisition part 221b and the second acquisition part 222b indicates that the distance to the object is within the predetermined range.

The intrusion determination part 224a and the intrusion determination part 224b output signals indicating intrusion detection to the safety control device 3 via the output part 24a if at least one of the distances is equal to or smaller than a predetermined value.

In addition, the intrusion determination part 224a and the intrusion determination part 224b respectively perform the following determination.

When the verification part 223a or the verification part 223b verifies that LI and L2 are substantially equal, the intrusion determination part 224a and the intrusion determination part 224b determine whether L1 is within the predetermined range. In other words, the intrusion determination part 224a performs the following determination. When L1 and L2 are substantially equal, the intrusion determination part 224a determines whether L1 is within a predetermined value B. If L1 is within the predetermined value B, the intrusion determination part 224a determines that the distance to the object is within the predetermined range.

In addition, when the verification part 223a or the verification part 223b verifies that L1 and L2 are not substantially equal, the intrusion determination part 224a and the intrusion determination part 224b respectively perform the following determination. The intrusion determination part 224a determines whether at least one of L1 and L2 is within the predetermined value B. If at least one of L1 and L2 is within the predetermined value B, the intrusion determination part 224a determines that the distance to the object is within the predetermined range.

According to the above configuration, the determination device 2 can reliably determine whether the distance to the object is within the predetermined range.

In addition, if both L1 and L2 are larger than the predetermined value B, the intrusion determination part 224a and the intrusion determination part 224b may output signals indicating that no intrusion has been detected in an external device such as the safety control device 3 via the output part 24a.

### (Distance Data Input/output Part 23a)

The distance data input/output part 23a inputs/outputs the signals acquired by the first acquisition part 221a and the first acquisition part 221b between the determination unit 20a and the determination unit 20b.

### (Output Part 24a)

In accordance with the instruction of the intrusion determination part 224a, the output part 24a outputs a signal indicating intrusion detection, a signal indicating the distance measurement result, etc. to the safety control device 3.

### (Observation Area of First Optical Distance Measurement Module 21a and Observation Area of Second Optical Distance Measurement Module 21b)

Next, an example of the observation area of the first optical distance measurement module 21a and the observation area of the second optical distance measurement module 21b will be described in detail.

In this example, the object under measurement intrudes into the observation areas of the first optical distance measurement module 21a and the second optical distance measurement module 21b from a predetermined direction.

The arrows shown in FIG. 3(a) and FIG. 3(b) indicate the direction of intrusion of the object under measurement. As shown in FIG. 3(a) and FIG. 3(b), R1, which is the observable area of the second optical distance measurement module 21b, includes a region on the side where the object intrudes with respect to R2, which is the observation area (or observable area) of the first optical distance measurement module 21a.

According to the above configuration, when the object under measurement intrudes into the observable area R2 of the first optical distance measurement module 21a, the object under measurement inevitably intrudes into the observable area R1 of the second optical distance measurement module 21b.

Thus, when the distance indicated by the signal outputted by the second optical distance measurement module 21b is within the predetermined range from the second optical distance measurement module 21b, there is a high possibility that the distance indicated by the signal outputted by the first optical distance measurement module 21a is within the predetermined range.

That is, according to the above configuration, even if the first optical distance measurement module 21a fails, the determination device 2 can still output a signal indicating intrusion detection according to the signal outputted by the second optical distance measurement module 21b. In other words, the entire observable area R2 of the first optical distance measurement module 21a is an area where the distance to the object under measurement can be verified by the distance indicated by the signal outputted by the second optical distance measurement module 21b. Therefore, the determination device 2 determines whether an intrusion occurs, and outputs a signal indicating intrusion detection when determining that there is an intrusion with high reliability.

Further, according to the above configuration, when the object under measurement intrudes into the observable area R2 of the first optical distance measurement module 21a, the object under measurement first intrudes into the observable area R1 of the second optical distance measurement module 21b.

Here, the intrusion determination part 224a and the intrusion determination part 224b provided in the determination unit 20b determine that there is an intrusion when the distance to the object under measurement is within the predetermined range in at least one region of R1 and R2. Therefore, if the object first intrudes into the observation area of the second optical distance measurement module 21b, the determination device 2 can detect intrusion of the object as early as possible.

### §3 Operation Example

### (Example of Flow of Processing of Determination Device 2)

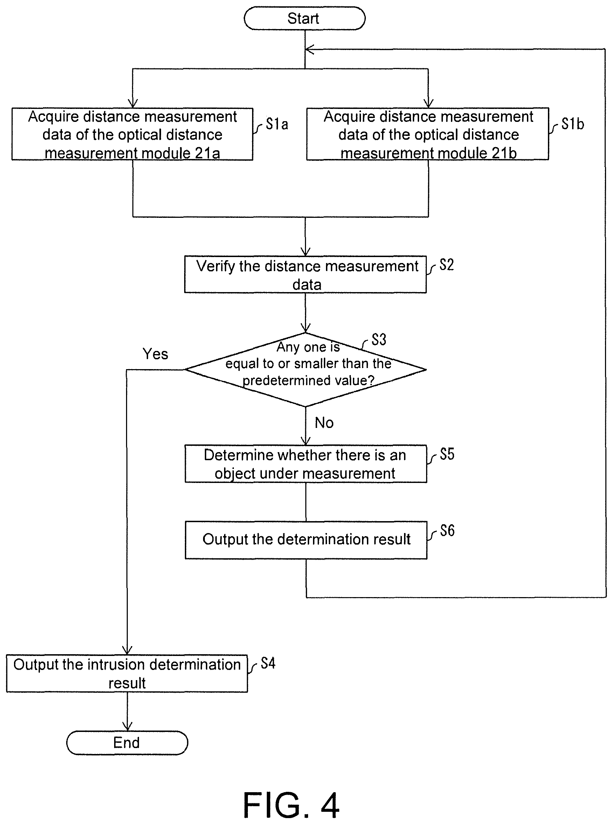

FIG. 4 is a flowchart showing an example of the flow of intrusion determination processing of the determination device 2. An example of the flow of intrusion determination processing of the determination device 2 will be described with reference to FIG. 4.

In the determination unit 20a, the first acquisition part 221a acquires the signal (distance measurement data) outputted by the first optical distance measurement module 21a and indicating the distance between the object under measurement in the observation area of the first optical distance measurement module 21a and the first optical distance measurement module 21a (step S1a: acquisition step).

In parallel with step S1a, in the determination unit 20b, the first acquisition part 221b acquires the signal (distance measurement data) outputted by the second optical distance measurement module 21b and indicating the distance between the object under measurement in the observation area of the second optical distance measurement module 21b and the second optical distance measurement module 21b (step S1b: acquisition step).

Subsequently, the verification part 223a and the verification part 223b verify the distance indicated by the signal outputted by the first optical distance measurement module 21a according to the distance indicated by the signal outputted by the second optical distance measurement module 21b (step S2).

Subsequently, the intrusion determination part 224a and the intrusion determination part 224b determine whether at least one of the distance indicated by the signal outputted by the first optical distance measurement module 21a and the distance indicated by the signal outputted by the second optical distance measurement module 21b is equal to or smaller than the predetermined value (step S3: intrusion determination step).

If at least one of the two distances is equal to or smaller than the predetermined value (YES in S3), the intrusion determination part 224a and the intrusion determination part 224b output signals indicating intrusion detection to the safety control device 3 via the output part 24a or the output part 24b (step S4: output process of the intrusion determination result) and end the processing.

If both the determined distances are larger than the predetermined value (NO in S3), the intrusion determination part 224a and the intrusion determination part 224b determine whether there is an object under measurement from the signals indicating the above two distances (step S5) and output the distance measurement result or signals indicating whether there is an object under measurement to the safety control device 3 (step S6). Thereafter, the processing returns to step S1a and step S1b.

### §4 Modified Example

### (Modified Example 1)

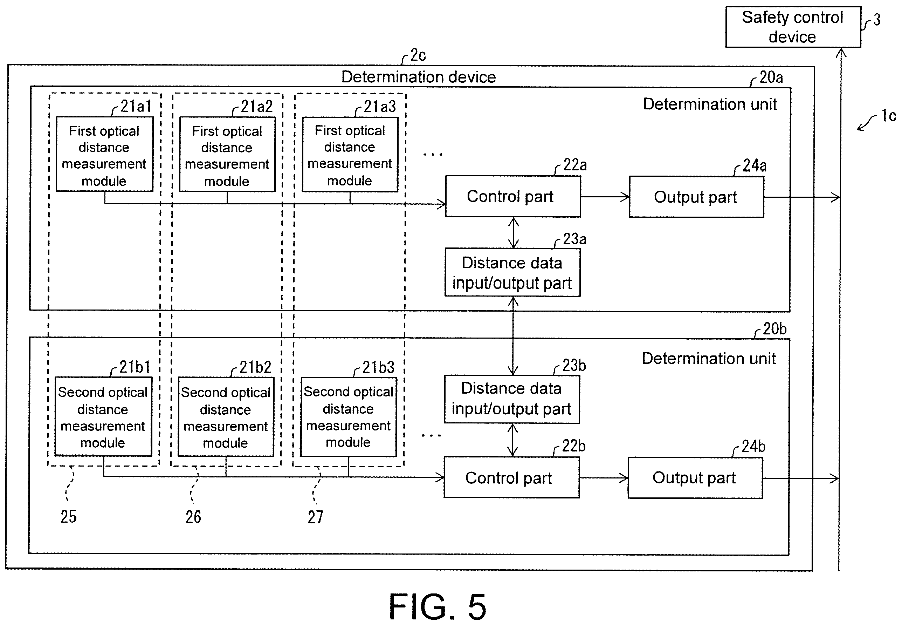

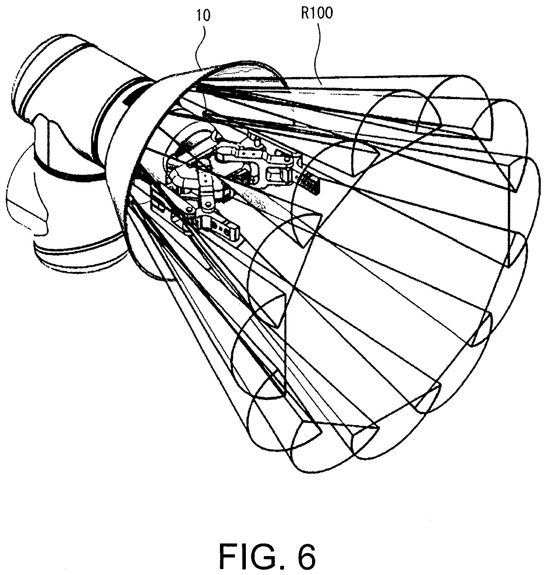

Modified examples of the disclosure will be described as follows with reference to FIG. 5 and FIG. 6. For convenience of description, members that have the same functions as those described in the above embodiment are denoted by the same reference numerals and descriptions thereof are omitted.

The above embodiment illustrates an example that the determination device 2 includes one sensor set which includes the first optical distance measurement module 21a and the second optical distance measurement module 21b.

A determination device 2c according to this modified example includes a plurality of sets of multiple optical distance measurement modules.

FIG. 5 is a diagram showing an example of application of the determination device 2c according to this modified example in a safety control system 1c. As shown in FIG. 5, the safety control system 1c includes the determination device 2c and the safety control device 3.

FIG. 6 is a diagram showing an example of an end effector of a robot 10 including the determination device 2c. The observation area R100 shown in FIG. 6 represents the observation areas of multiple optical distance measurement modules. As shown in FIG. 6, a plurality of observation areas are set around the end effector of the robot 10.

As shown in FIG. 5, the determination unit 20a of the determination device 2c includes a plurality of optical distance measurement modules and at least includes the first optical distance measurement modules 21a1, 21a2, and 21a3. The determination unit 20b of the determination device 2c also includes a plurality of optical distance measurement modules and at least includes the second optical distance measurement modules 21b1, 21b2, and 21b3.

The first optical distance measurement module 21a1 and the second optical distance measurement module 21b1 are included in the optical distance measurement module set 25. The observation area of the first optical distance measurement module 21a1 is within the observation area of the second optical distance measurement module 21b1.

The first optical distance measurement module 21a2 and the second optical distance measurement module 21b2 are included in the optical distance measurement module set 26. The observation area of the first optical distance measurement module 21a2 is within the observation area of the second optical distance measurement module 21b2.

The first optical distance measurement module 21a3 and the second optical distance measurement module 21b3 are included in the optical distance measurement module set 27. The observation area of the first optical distance measurement module 21a3 is within the observation area of the second optical distance measurement module 21b3.

Each of the optical distance measurement modules outputs a signal indicating the distance between the object in the observation area of the optical distance measurement module and the optical distance measurement module to the control part 22a or the control part 22b by serial transmission for each set.

In other words, the determination device 2 has multiple sensor sets. In addition, the signals outputted by the optical distance measurement sensors of each of the sensor sets are transmitted by serial transmission to the first acquisition parts 221a and 221b of the control part 22a and the control part 22b respectively.

According to the above configuration, the control part 22a and the control part 22b acquire the signals outputted by serial transmission. Therefore, the number of lines of the determination device 2c can be reduced. Thus, the manufacturing cost of the determination device 2c can be reduced.

### (Modified Example 2)

The above-described modified example and the above-described embodiment illustrate an example that the distance indicated by the signal outputted by one first optical distance measurement module is verified by using the distance indicated by the signal outputted by one second optical distance measurement module in one sensor set.

The determination device 2 of this modified example may verify the distance indicated by the signals outputted by two or more first optical distance measurement modules by using the distance indicated by the signal outputted by one second optical distance measurement module in one sensor set.

According to the above configuration, the signals outputted by two or more first optical distance measurement modules can be verified by using one second optical distance measurement module in one sensor set. Therefore, in comparison with using the distance indicated by the signal outputted by one second optical distance measurement module to verify the distance indicated by the signal outputted by one first optical distance measurement module, the cost for realizing the determination device 2 (in particular, one sensor set) can be reduced.

### [Example of Implementation by Software]

The control blocks (in particular, the control part 22a and the control part 22b) of the determination device 2, 2c may be realized by a logic circuit (hardware) formed in an integrated circuit (IC chip) or the like, or may be realized by software.

In the latter case, the determination device 2, 2c is provided with a computer for executing commands of a program which is software for realizing each function. The computer includes one or more processors and includes a computer readable recording medium storing the program, for example. Then, in the computer, the processor reads the program from the recording medium and executes the program, so as to achieve the disclosure. A CPU (Central Processing Unit) can be used as the processor, for example. In addition to a "non-temporary tangible medium" such as a ROM (Read Only Memory), a tape, a disk, a card, a semiconductor memory, a programmable logic circuit or the like can be used as the recording medium. Further, a RAM (Random Access Memory) or the like may be included for developing the program. In addition, the program may be provided to the computer via any transmission medium (such as a communication network or a broadcast wave) that is capable of transmitting the program. An embodiment of the disclosure can also be realized in the form of a data signal embedded in a carrier wave, in which the program is embodied by electronic transmission.

### [Description of Reference Numerals]

- 1, 1c: safety control system
- 2, 2c: determination device
- 3: safety control device
- 10: robot
- 20a, 20b: determination unit
- 21a, 21a1, 21a2, 21a3: first optical distance measurement module
- 21b, 21b1, 21b2, 21b3: second optical distance measurement module
- 22a, 22b: control part
- 23a, 23b: distance data input/output part
- 24a, 24b: output part
- 25, 26, 27: set
- 211: light projecting part
- 212: light receiving part
- 213: distance calculation part
- 221a, 221b: first acquisition part
- 222a, 222b: second acquisition part
- 223a, 223b: verification part
- 224a, 224b: intrusion determination part
- R1, R2: observable area
- R100: observation area
- S1a, S1b, S2, S3, S4, S5, S6: step

## Claims

1. A determination device (2, 2c) for outputting a signal indicating intrusion detection when a distance to an object is within a predetermined range, **characterized in that**, the determination device (2, 2c) comprising:
a plurality of acquisition parts (221a, 221b, 222a, 222b) each acquiring a signal outputted by each of a plurality of optical distance measurement sensors (21a, 21a1, 21a2, 21a3, 21b, 21b1, 21b2, 21b3) included in a sensor set (25, 26, 27); and
a plurality of intrusion determination parts (224a, 224b) each determining whether at least one of the signals respectively received by the acquisition parts (221a, 221b, 222a, 222b) indicates that the distance to the object is within the predetermined range,
wherein an observation area of a first optical distance measurement sensor (21a, 21a1, 21a2, 21a3), which is an optical distance measurement sensor in the sensor set (25, 26, 27), is within an observation area of a second optical distance measurement sensor (21b, 21b1, 21b2, 21b3), which is an optical distance measurement sensor different from the first optical distance measurement sensor (21a, 21a1, 21a2, 21a3) in the sensor set (25, 26, 27).

2. The determination device (2, 2c) according to claim 1, comprising a plurality of verification parts (223a, 223b) each verifying a distance indicated by a signal outputted by the first optical distance measurement sensor (21a, 21a1, 21a2, 21a3) according to a distance indicated by a signal outputted by the second optical distance measurement sensor (21b, 21b1, 21b2, 21b3),
wherein if the verification part (223a, 223b) verifies that the distance indicated by the signal outputted by the first optical distance measurement sensor (21a, 21a1, 21a2, 21a3) and the distance indicated by the signal outputted by the second optical distance measurement sensor (21b, 21b1, 21b2, 21b3) are substantially equal, each of the intrusion determination parts (224a, 224b) determines whether the distance indicated by the signal outputted by the first optical distance measurement sensor (21a, 21a1, 21a2, 21a3) indicates that the distance is within the predetermined range.

3. The determination device (2, 2c) according to claim 1 or 2, wherein the object intrudes into the observation areas of the first optical distance measurement sensor (21a, 21a1, 21a2, 21a3) and the second optical distance measurement sensor (21b, 21b1, 21b2, 21b3) from a predetermined direction, and
the observation area of the second optical distance measurement sensor (21b, 21b1, 21b2, 21b3) comprises a region on a side where the object intrudes into the observation area of the first optical distance measurement sensor (21a, 21a1, 21a2, 21a3).

4. The determination device (2c) according to any one of claims 1 to 3, wherein a plurality of the sensor sets (25, 26, 27) are provided, and
the signals outputted by the optical distance measurement sensors (21a1, 21a2, 21a3, 21b1, 21b2, 21b3) of each of the sensor sets (25, 26, 27) are transmitted to each of the acquisition parts (221a, 221b, 222a, 222b) by serial transmission.

5. A control method of a determination device (2, 2c) for outputting a signal indicating intrusion detection when a distance to an object is within a predetermined range, **characterized in that**, the control method comprising:
a plurality of acquisition steps (S1a, S1b) each acquiring a signal outputted by each of a plurality of optical distance measurement sensors (21a, 21a1, 21a2, 21a3, 21b, 21b1, 21b2, 21b3) included in a sensor set (25, 26, 27); and
a plurality of intrusion determination steps (S3) each determining whether at least one of the signals respectively received in the acquisition steps (S1a, S1b) indicates that the distance to the object is within the predetermined range,
wherein an observation area of a first optical distance measurement sensor (21a, 21a1, 21a2, 21a3), which is an optical distance measurement sensor in the sensor set (25, 26, 27), is within an observation area of a second optical distance measurement sensor (21b, 21b1, 21b2, 21b3), which is an optical distance measurement sensor different from the first optical distance measurement sensor (21a, 21a1, 21a2, 21a3) in the sensor set (25, 26, 27).
